# EUROPEAN PATENT SPECIFICATION

(11) **EP 1 739 855 B1**
(45) Date of publication and mention of the grant of the patent: **26.11.2008**
(21) Application number: 06012640.6
(22) Date of filing: 20.06.2006
(51) Int. Cl.: H04B 7/08, H04B 7/06

(54) **Transmitter-receiver of mobile communication system**
Sender-Empfänger für Funkkommunikationssystem
Émetteur et récepteur pour un système de communications mobile

(30) Priority: 27.06.2005 JP 2005186798
(43) Date of publication of application: 03.01.2007
(73) Proprietor: NEC Corporation, Minato-ku Tokyo (JP)
(72) Inventor: Oura, Satoshi, Tokyo (JP); Maruta, Yasushi, Tokyo (JP)
(74) Representative: Glawe, Delfs, Moll

(56) References cited:
- EP-A- 1 091 504
- WO-A-99/01951
- WO-A-03/007494
- GB-A- 2 349 045
- US-A1- 2002 039 886
- US-B1- 6 317 467

## Description

### BACKGROUND OF THE INVENTION

### Field of the Invention

The present invention relates to a transmitter-receiver preferably used for a mobile communication system of code division multiple access (hereinafter referred to as CDMA).

### Description of the Related Art

The CDMA is a communication system for transmitting a signal for each user by using a spreading code specifically assigned to each user and thereby spreading the signal to a wide-band signal (spectrum spreading). A receiving side reproduces the information data series transmitted by using a spreading code same as the spreading code used by a transmitting side and thereby despreading the signal.

Because the CDMA identifies each user by using the above spreading code, a plurality of users can perform radio communication by using the same frequency band. However, as the number of users which perform communication at the same frequency band increases, the level of interference power increases restricting the subscriber capacity of a mobile communication system. Therefore, to increase the subscriber capacity, it is necessary to suppress received signals from users other than the one in communication with (hereinafter referred to as interference user) and divert the transmission from the interference user. One of the effective techniques to increase the subscriber capacity is an adaptive antenna.

A transmitter-receiver (adaptive-antenna transmitter-receiver) using the adaptive antenna technique has a plurality of antennas arranged at a constant interval. Moreover, the transmitter-receiver has a configuration of improving the quality of service by controlling the phase and amplitude of received or transmitted signals corresponding to each antenna and forming a directivity beam to a mobile terminal of a user who is in communication with (hereinafter referred to as desired user).

As a conventional example of the adaptive-antenna transmitter-receiver, the technique for controlling the directivity by a plurality of antennas is disclosed in Japanese Patent Laid-Open No. 2001-251233. In this case, signals received by a plurality of antennas are multiplied by optimum weight vectors and synthesized to form a directivity beam to the direction of a desired user. Moreover, a transmission beam is formed to the direction of a desired user by multiplying the transmission data for each antenna by transmission weight vectors generated calculated from the weight vectors used for receiving to improve the quality of service.

The adaptive-antenna transmitter-receiver normally estimates the direction of arrival (hereinafter referred to as DOA) of an uplink signal (signal to be transmitted from mobile terminal to radio base station). Moreover, the transmitter-receiver decides the transmitting direction of a downlink signal (signal to be transmitted from radio base station to mobile terminal) using the estimated DOA of an uplink signal. In the case of the above Japanese Patent Laid-Open No. 2001-251233, a delay profile is calculated for every plurality of received signals and the range of DOA of an uplink signal is estimated from the delay profile. Then, a downlink signal is transmitted to a direction having the maximum received power in the estimated range of DOA. In this case, the delay profile shows the arrival timing of a direct wave and its delayed waves and the powered cross-correlation of a received signal and known pilot symbol series.

It is also described in the above Japanese Patent Laid-Open No. 2001-251233 that a downlink signal is transmitted by detecting a direction of an interference user and forming a directivity beam with a null pattern in the direction of the interference user. By executing the above processing, the interference power transmitted to the mobile terminal of the interference user is reduced.

Moreover, as another example of a conventional transmitter-receiver, an adaptive-antenna transmitter-receiver used for CDMA is disclosed in Japanese Patent Laid-Open No. 2001-036451. A technique is described here which enables path search for receiving an uplink signal even under low Eb/Io (ratio of signal energy per bit to interference power per Hz). Because directivity gain is obtained in an adaptive antenna, Eb/Io per an antenna is lowered when Eb/Io is controlled to satisfy the desired quality of service. Therefore, a technique for performing stable path search even under low Eb/Io is required. In this case, cross-correlation values (correlation signal) between uplink signal received by each antenna and known pilot symbol series (replica signal) are calculated. These correlation signals are multiplied by an antenna weight coefficient, which controls the directivity of an antenna, and antenna-synthesized to calculate a delay profile corresponding to each direction of directivity beam. After delay profiles are averaged for a certain period of time, one or more peaks having a large level are detected from the weighting-averaged correlation signal (corresponding to delay profile of each direction of directivity beam), and levels and timings corresponding to the peaks are output as received levels and received timings of the received path.

Therefore, by detecting the path of an uplink signal by the technique disclosed in Japanese Patent Laid-Open No. 2001-036451 and transimitting a downlink signal in the direction of a path in which received power is maximum by the technique disclosed in Japanese Patent Laid-Open No. 2001-251233, it is possible to improve the quality of service of a desired user while reducing the interference power transmitted to an interference user.

However, in the case of the above prior art, a case is not considered in which a desired user and an interference user are present in the same direction from an adaptive-antenna transmitter-receiver. By the above-described prior art, a downlink signal is transmitted by forming a directivity beam in the DOA estimated from the uplink signal of a desired user, transimitting an interference wave to an interference user to cause deterioration on the quality of service of the interference user.

### SUMMARY OF THE INVENTION

The object of the present invention is to solve problems of the above-described prior art. The present invention provides a transmitter-receiver of a mobile communication system capable of performing communication with a desired user without deteriorating the quality of service of an interference user, even when a desired user and interference user are present in the same direction.

To achieve the above object, a transmitter-receiver for a mobile communication system of the present invention is a transmitter-receiver which detects a plurality of paths from a desired user and estimate its DOA by multiplying correlation signals of uplink signals received by a plurality of antennas by an antenna weight coefficient and synthesizes them between antennas to form a directivity beam, demodulate the received signals by multiplying the received uplink signals by antenna weight coefficients corresponding to the estimated DOA to form a directivity beam, transmits the downlink signals to the desired user by multiplying downlink signals by antenna weight coefficient corresponding to the DOA to form a directivity beam, has a configuration having a downlink path selection thresholding circuit for determining whether the path level of each path is larger than a predetermined threshold and outputting the identification information for identifying a path having a path level larger than the threshold, path selecting circuit for selecting the path specified by the downlink-transmission path selection thresholding circuit, interference power calculating circuit for calculating interference powers included in the received power of each path selected by the path selecting circuit, and direction of minimum interference determining circuit for deciding the direction of a path having the minimum interference power among interference powers calculated by the interference power calculating circuit as the transmitting direction of a downlink signal.
Also, a transmitter-receiver for a mobile communication system is a transmitter-receiver which detects a plurality of paths from a desired user and estimate its DOA by multiplying correlation signals of uplink signals received by a plurality of antennas by an antenna weight coefficient and synthesizes them between antennas to form a directivity beam, demodulate the received signals by multiplying the received uplink signals by antenna weight coefficients corresponding to the estimated DOA to form a directivity beam, transmits the downlink signals to a desired user by multiplying downlink signals by antenna weight coefficient corresponding to the DOA to form a directivity beam, has a configuration having an SIR calculating circuit for calculating the ratio of signal power to interference power of received signal for each path, a downlink-transmission SIR thresholding circuit for determining whether the ratio of signalpower to interference power for each path is larger than a predetermined threshold and outputting identification information for identifying a path having the ratio of signal power to interference power larger than the threshold, path selecting circuit for selecting the path specified by the downlink-transmission SIR thresholding circuit, interference power calculating circuit for calculating interference powers included in received signals of paths selected by the path selecting circuit, and direction of minimum interference determining circuit for deciding the direction of a path having minimum interference power among interference powers calculated by the interference power calculating circuit as the transmitting direction of a downlink signal.

Also, a transmitter-receiver for a mobile communication system is a transmitter-receiver which detects a plurality of paths from a desired user and estimate its DOA by multiplying correlation signals of uplink signals received by a plurality of antennas by an antenna weight coefficient and synthesizes them between antennas to form a directivity beam, demodulate the received signals by multiplying the received uplink signals by antenna weight coefficients corresponding to the estimated DOA to form a directivity beam, transmits the downlink signals to a desired user by multiplying downlink signals by antenna weight coefficient corresponding to the DOA to form a directivity beam, has a configuration having a signal power calculating circuit for calculating the signal power of a received signal of each path, a downlink-transmission signal power thresholding circuit for determining whether the signal power for each path is larger than a predetermined threshold and outputting the identification information for identifying a path having signal power larger than the threshold, path selecting circuit for selecting a path specified by the downlink signal power thresholding circuit, interference power calculating circuit for calculating the interference power included in the received signal of the path selected by the path selecting circuit, and a direction of minimum interference determining circuit for deciding the direction of a path having minimum interference power among interference powers calculated by the interference power calculating circuit as a transmitting direction of downlink signal.

The transmitter-receiver of the mobile communication system constituted as described above selects a plurality of paths respectively having preferable reception quality by determining whether a path level, ratio of signal power to interference power, or signal power of a plurality of paths is larger than a predetermined threshold by a downlink path selection thresholding circuit, downlink-transmission SIR thresholding circuit, or downlink-transmission signal power thresholding circuit when transmitting a downlink signal. Furthermore, the transmitter-receiver calculates interference powers included in uplink received signals of the paths by the interference power calculating circuit, selects a path having minimum interference power by the direction of minimum interference determining circuit, and determines the DOA of the path as the transmitting direction of a downlink signal. Therefore, even when a desired user and an interference user are present in the same direction from a transmitter-receiver, the transmitter-receiver transmits a downlink signal in the direction of an indirect wave which has relatively-preferable reception quality, instead of the direction of a direct wave from a desired user, for example. As a result, it is possible to perform communication with the desired user while avoiding the interference user.

According to the transmitter-receiver of a mobile communication system of the present invention, even when a desired user and an interference user are present in the same direction, communication with the desired user can be made while avoiding the interference user. Therefore, it is possible to preferably perform communication with a desired user without deteriorating the quality of service of an interference user.

### BRIEF DESCRIPTION OF THE DRAWINGS

The above and other objects, features and advantages of the present invention will become more apparent from the following detailed description when taken in conjunction with the accompanying drawings wherein:
FIG. 1 is an illustration showing a propagation route of a radio signal to be transmitted or received between a transmitter-receiver of the present invention and a mobile terminal;
FIG. 2 is a block diagram showing a configuration of first embodiment of a transmitter-receiver of the present invention;
FIG. 3 is an exemplary graph showing a two-dimensional profile used for the present invention;
FIG. 4 is an exemplary table showing path timing, DOA, and path level for each path in order to describe FIG. 3;
FIG. 5 is an exemplary graph showing interference power, DOA, and path level for each path in order to describe FIG. 3;
FIG. 6 is a block diagram showing a configuration of second embodiment of a transmitter-receiver of the present invention; and
FIG. 7 is a block diagram showing a configuration of third embodiment of a transmitter-receiver of the present invention.

### DETAILED DESCRIPTION OF THE PREFERRED EMBODIMENTS

Preferred embodiments of the present invention will be described below in detail with reference to the drawings.

Hereinafter, the present invention is described by referring to the accompanying drawings.

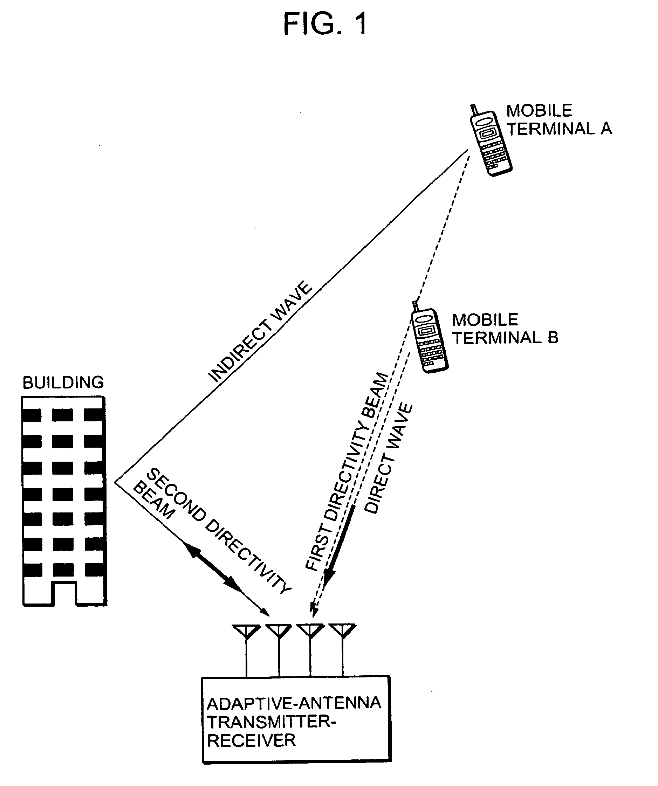

A transmitter-receiver for a mobile communication system of the present invention realizes the communication with a desired user while avoiding an interference user by using the feature of the mobile communication system of CDMA for detecting a plurality of paths (multipath). For example, FIG. 1 shows a case in which a mobile terminal A is a desired user and a mobile terminal B is an interference user. The transmitter-receiver forms a first directivity beam in the direction of a direct wave and forms a second directivity beam in the direction of an indirect wave (wave reflected from building) to respectively receive an uplink signal. Then, the transmitter-receiver demodulates a received signal by RAKE-combining uplink signals received by the directivity beams.

In the case of the downlink, because the mobile terminal A and the mobile terminal B are present in the same direction, transmitting a downlink signal in the direction of an indirect wave does not affect the quality of service of the mobile terminal B compared to transmitting the downlink signal in the direction of a direct wave for the mobile terminal A. The present invention proposes a technique capable of transmitting a downlink signal by forming a directivity beam in a direction in which the quality of service of the interference user is less affected when a desired user and a interference user are present in the same direction from the transmitter-receiver. Specifically, a downlink signal is transmitted by estimating DOA for each path of an uplink signal, selecting a path whose reception quality is preferable, calculating the interference power of each path, and forming a directivity beam in the DOA of a path whose interference power is minimum.

### (First embodiment)

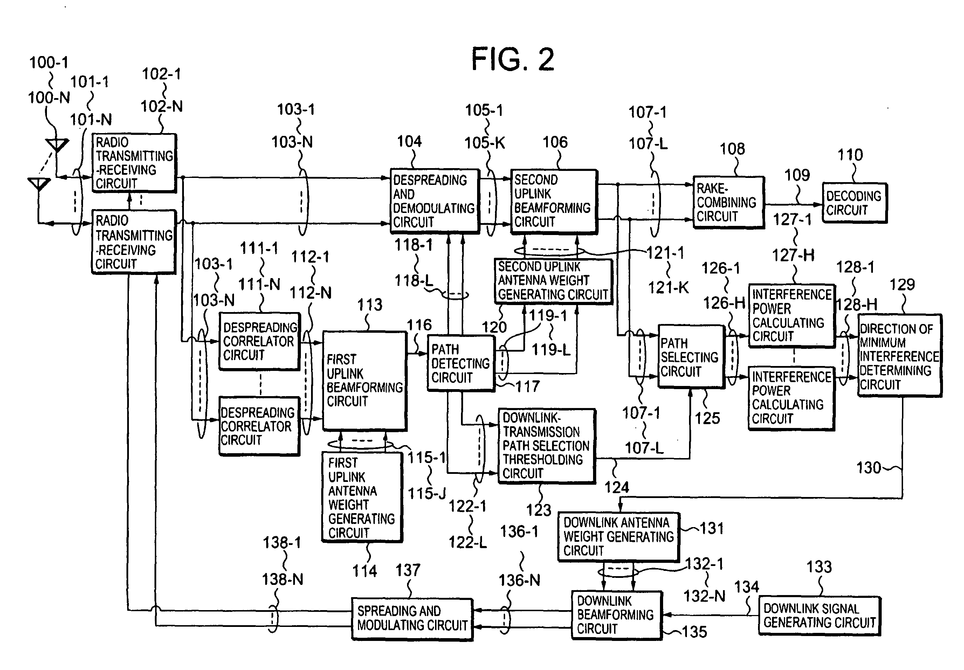

FIG. 2 is a block diagram showing a configuration of the first embodiment of a transmitter-receiver of the present invention. In this case, the transmitter-receiver for a mobile communication system of the present invention is an adaptive antenna transmitter-receiver.

As shown in FIG. 2, the adaptive-antenna transmitter-receiver of the first embodiment has antenna units 100-1 to 100-N (N is a natural number), radio transmission-reception circuits 102-1 to 102-N, despreading correlator circuits 111-1 to 111-N, first uplink antenna weight generating circuit 114, first uplink beamforming circuit 113, path detecting circuit 117, despreading and demodulating circuit 104, second uplink beamforming circuit 106, second uplink antenna weight generating circuit 120, RAKE-combining circuit 108, decoding circuit 110, downlink path selection thresholding circuit 123, path selecting circuit 125, interference power calculating circuits 127-1 to 127-H, direction of minimum interference determining circuit 129, downlink antenna weight generating circuit 131, downlink signal generating circuit 133, downlink beamforming circuit 135, and spreading and modulating circuit 137.

The antenna units 100-1 to 100-N transmit or receive a plurality of radio signals 101-1 to 101-N.

The radio transmission-reception circuits 102-1 to 102-N convert the uplink radio signals 101-1 to 101-N received by antenna units 100-1 to 100-N into uplink spreaded signals 103-1 to 103-N in a base band. The circuits 102-1 to 102-N also convert downlink spreaded signals 138-1 to 138-N into downlink radio signals 101-1 to 101-N and output them to antenna units 100-1 to 100-N.

The despreading correlator circuits 111-1 to 111-N perform despreading processing on the uplink spreaded signals 103-1 to 103-N and calculates correlation between the despreaded signals and known pilot symbol series to output correlation signals 112-1 to 112-N.

When receiving an uplink signal, the first uplink antenna weight generating circuit 114 generates uplink antenna weight coefficients 115-1 to 115-J (J is a natural number).

A first uplink beamforming circuit 113 multiplies correlation signals 112-1 to 112-N by antenna weight coefficients 115-1 to 115-J generated by the first uplink antenna weight generating circuit 114, synthesizes their products over the number of antennas (N) to form a directivity beam, and generates a time-and-angle delay profiles (hereinafter referred to as two-dimensional profiles) 116.

A path detecting circuit 117 detects L (L is a natural number) paths whose path levels are larger than a predetermined path-detection threshold value from the above two-dimensional profiles 116 and outputs DOAs 119-1 to 119-L for each path, path timings 118-1 to 118-L, and path levels 122-1 to 122-L. In case that the number of paths is smaller than L, L is changed to the number of paths.

A despreading and demodulating circuit 104 despreads and demodulates uplink spreaded signals 103-1 to 103-N by using path timings 118-1 to 118-L.

The second uplink beamforming circuit 106 multiplies despreaded symbol signals 105-1 to 105-K (K is a natural number) for each antenna on each path by antenna weight coefficients 121-1 to 121-K and synthesizes their products over the number of antennas (N) to form a directivity beam and outputs beamformed despreaded symbol signals 107-1 to 107-L for each path.

The second uplink antenna weight generating circuit 120 outputs the antenna weight coefficients 121-1 to 121-K, which are generated for the DOAs 119-1 to 119-L of each path outputted from the path detecting circuit 117, to the second uplink beamforming circuit 106.

The RAKE-combining circuit 108 RAKE-combines the beamformed despreaded symbol signals 107-1 to 107-L outputted from the second uplink beamforming circuit 106.

The decoding circuit 110 decodes the RAKE-combined symbol signal 109.

When transmitting a downlink signal, the downlink path selection thresholding circuit 123 determines whether the path levels 122-1 to 122-L outputted from the path detecting circuit 117 are larger than a predetermined downlink path selection threshold. Furthermore, the circuit 123 selects a path larger than the threshold and outputs path-number information 124 for identifying the path.

The path selecting circuit 125 selects H (H is a natural number) paths specified by the path-number information 124 out of beamformed despreaded symbol signals (received signals) 107-1 to 107-L outputted from the second uplink-beamforming circuit 106.

The interference power calculating circuits 127-1 to 127-H calculate interference powers included in the beamformed despreaded symbol signals 126-1 to 126-H of the paths selected by the path selecting circuit 125.

The direction of minimum interference determining circuit 129 determines the DOA of a path having minimum interference power out of interference powers 128-1 to 128-H calculated by the interference-power calculating circuits 127-1 to 127-H.

The downlink antenna weight generating circuit 131 generates antenna weight coefficients 132-1 to 132-N for transmitting a downlink signal, corresponding to the DOA 130 which is outputted from the direction of minimum interference determining circuit 129.

The downlink-signal generating circuit 133 generates a downlink symbol signal 134.

The downlink beamforming circuit 135 divides the downlink symbol signal 134 to the number of antennas (N) and forms a directivity beam by multiplying antenna weight coefficients 132-1 to 132-N generated by the downlink antenna weight generating circuit 131 by the downlink symbol signal of each antenna.

The spreading and modulating circuit 137 spreads and modulates the beamformed downlink symbol signals 136-1 to 136-N and outputs the beamformed downlink spreaded signals 138-1 to 138-N.

In the case of the above configuration, operations of the adaptive-antenna transmitter-receiver of this embodiment are described below.

Uplink radio signals 101-1 to 101-N are received by N antenna units 100-1 to 100-N and converted into uplink spreaded signals 103-1 to 103-N in baseband by the radio transmission-reception circuits 102-1 to 102-N.

The despreading correlator circuits 111-1 to 111-N despreads the uplink spreaded signals 103-1 to 103-N and calculates correlation between the despreaded signals and known pilot symbol series to output correlation signals 112-1 to 112-N to the first uplink beamforming circuit 113. The correlation signals 112-1 to 112-N of each antenna are correlation values of received signals on the time direction showing when the level of the correlation becomes high within a given time range. The time range is decided by the hardware performance of the despreading correlator circuits 111-1 to 111-N.

The first uplink antenna weight generating circuit 114 generates J antenna weight coefficients 115-1 to 115-J for receiving uplink signals and outputs the coefficients 115-1 to 115-J to the first uplink beamforming circuit 113. In this case, J is a natural number set arbitrarily, denoting the number of directivity beams x number of antennas (N). For example, when forming a directivity beam for receiving an uplink signal every 1° in a range of ±60° centering around the front, the total of 121 sets of antenna weight coefficients are generated. In this case, 121 × number of antennas (N) are obtained for J.

The first uplink beamforming circuit 113 multiplies the correlation signals 112-1 to 112-N of each antenna by the antenna weight coefficients 115-1 to 115-J corresponding to the angle of each directivity beam generated to receive uplink signals and synthesizes the products for the number of antennas (N) to form a directivity beam for receiving an uplink signal and generate the two-dimensional profile 116. By multiplying the correlation signals 112-1 to 112-N by the antenna weight coefficients 115-1 to 115-N and synthesizing them, the total of 121 angle-directional correlation values are calculated at each timing of a correlation signal and a two-dimensional profile including the correlation information on time-and angle direction of received signals is generated.

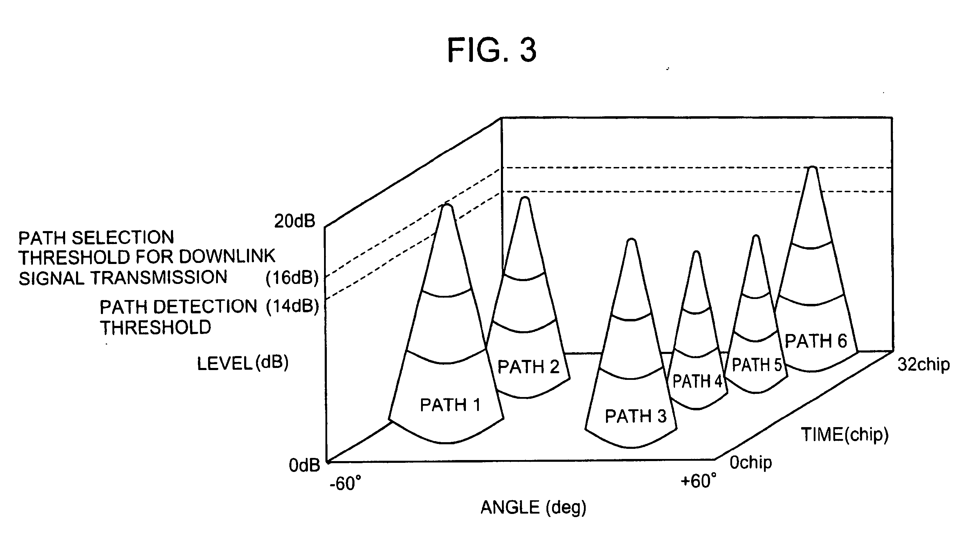

In this case, it is assumed that the two-dimensional profile shown in FIG. 3 is obtained. FIG. 3 is a graph in which a correlation value at a 0.25-chip accuracy in a range of 32 chips in the time direction and correlation values at 1° accuracy in a range of ±60° in the angular direction are plotted.

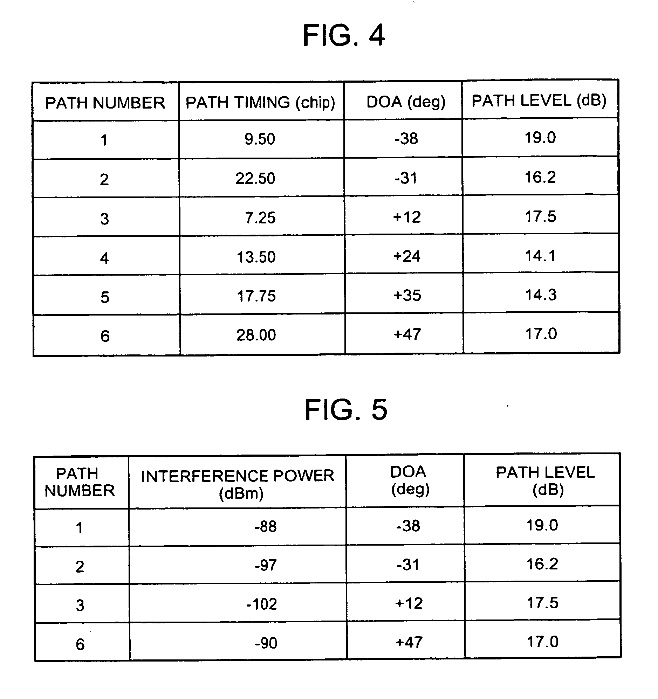

The path detecting circuit 117 has a level higher than a predetermined path-detection threshold by using the two-dimensional profile 116 generated by the first uplink beamforming circuit 113 and detects L peaks as paths in the descending order from the path with the highest level. In this case, the timing, angle, and level corresponding to each path are detected as path timing, DOA, and path level, respectively. Because a path is associated with DOA, it is possible to uniquely decide DOA by selecting a path in the subsequent processing. It is preferable to optimally set the path-detection threshold from the two-dimensional profile 116. For example, the threshold is set to a value 0.1 times larger than the highest path level. The number of L is decided in accordance with the hardware performance of the path detecting circuit 117 (for example performance of DSP, scale of memory). In the case of the example shown in FIG. 3, a path-detection threshold is set to 14.0 dB and six peaks larger than the path-detection threshold are selected as paths.' It is assumed that the path timing, DOA, and path level of each path have the values shown in the table in FIG. 4. A path number (identification information) for identifying a detected path is provided for the detected path.

The path detecting circuit 117 outputs the detected path timings 118-1 to 118-L to the despreading and demodulating circuit 104 and outputs the DOA 119-1 to 119-L to the second uplink antenna-weight generating circuit 120. The circuit 117 also outputs the path levels 122-1 to 122-L to the downlink-transmission path selection thresholding circuit 123. Because the path timings, DOAs, and path levels are associated with path numbers in one-to-one correspondence, the number of path timings, DOAs, and path levels coincides with the detected number of paths (L).

The despreading and demodulating circuit 104 despreads and demodulates the uplink spreaded signals 103-1 to 103-N for each antenna by using the path timings 118-1 to 118-L from the path detecting circuit 117 as sync timings and obtains despreaded symbol signals (received signals) 105-1 to 105-K of each path and antenna. Because N uplink spreaded signals are despreaded and demodulated at L path timings, the number of despreaded symbols equals to the number of paths (L) x number of antennas (N). In this case, K denotes the number of antennas (N) x number of paths (L) and is shown by a natural number.

The second uplink antenna weight generating circuit 120 outputs the antenna weight coefficients 121-1 to 121-K, which correspond to the DOAs 119-1 to 119-L outputted from the path detecting circuit 117, to the second uplink beamforming circuit 106.

The second uplink beamforming circuit 106 multiplies the despreaded symbols 105-1 to 105-K of each path and antenna, outputted from the despreading and demodulating circuit 104, by the antenna weight coefficients 121-1 to 121-K generated by the second uplink antenna weight generating circuit 120, synthesizes the products over the number of antennas (N) for each path to obtain the beamformed despreaded symbol signals 107-1 to 107-L of the number of paths (L), and outputs the beamformed despreaded symbol signals to the RAKE-combining circuit 108 and path selecting circuit 125.

The RAKE-combining circuit 108 RAKE-combines the beamformed despreaded symbols 107-1 to 107-L and outputs the RAKE-combined despreaded symbol 109.

The decoding circuit 110 reproduces an original signal by decoding the RAKE-combined despreaded symbol 109.

The downlink-transmission path selection thresholding circuit 123 determines whether L path levels 122-1 to 122-L output from the path detecting circuit 117 are higher than the downlink-transmission path selection threshold of a predetermined downlink signal and outputs a path number having a path level higher than the threshold to the path selecting circuit 125 as the path-number information 124. In the case of the example shown in FIG. 3, the downlink-transmission path selection threshold of a downlink signal is assumed as 16 dB, the number of paths having a level higher than the threshold is four such as paths 1, 2, 3, and 6. It is allowed that the number of paths to be selected by the downlink-transmission path selection thresholding circuit 123 is not limited as long as a plurality of paths having a path level higher than the downlink path-selection threshold is selected. For example, it is allowed to select all paths having a path level higher than the downlink path-selection threshold or select the number of paths (H paths) previously set in descending order from a path having the highest path level. The number of Hs is decided by the hardware performance of the downlink-transmission path selection thresholding circuit 123. However, when no path having a path level higher than the downlink-transmission path selection threshold is present, a path having the highest path level is exceptionally selected.

In the case of this embodiment, by setting a downlink-transmission path selection threshold separately from a path-detection threshold used to detect the path of a received signal, a path having preferable reception quality is selected and used for determining the transmitting direction of a downlink signal. This prevents selecting a path of a bad reception quality for transmitting direction of a downlink signal because interference power is low. It is preferable to optimally set a downlink path-selection threshold from the two-dimensional profile 116, similarly to a path-detection threshold. For example, the threshold is set to a value approx. several dB larger than a path-detection threshold.

The path selecting circuit 125 selects H paths each having a path level higher than a downlink-transmission path selection threshold specified by the path-number information 124 out of beamformed despreaded symbols 107-1 to 107-L. In the case of the example shown in FIG. 3, H is equal to 4.

The interference power calculating circuits 127-1 to 127-H calculate interference powers included in the beamformed despreaded symbols 126-1 to 126-H of the paths selected by the path selecting circuit 125. The interference power can be calculated as the dispersion from the average value of fading envelops using a pilot signal in a despreaded symbol as a measurement interval. In the case of the present invention, since it is only required to obtain the interference power for each received signal after despreading, any widely-known method can be used to calculate the interference power.

The direction of minimum interference determining circuit 129 determines a path having minimum interference power out of the interference powers 128-1 to 128-H calculated by the interference power calculating circuits 127-1 to 127-H and outputs the DOA 130 of the path. Because it is necessary to refer to the DOA corresponding to each path number, the second uplink beamforming circuit 106 mounts DOA information on the beamformed despreaded symbols 107-1 to 107-L and subsequently, each circuit up to the direction of minimum interference determining circuit 129 outputs a signal with the DOA information.

The downlink antenna weight generating circuit 131 outputs the antenna weight coefficients 132-1 to 132-N corresponding to the DOA 130 to the downlink beamforming circuit 135.

The downlink beamforming circuit 135 forms a directivity beam for transmitting a downlink signal by dividing downlink symbol signals 134 by the number of antennas (N) and multiplying the downlink symbol signals 134 by the antenna weight coefficients 132-1 to 132-N outputted from the downlink antenna weight generating circuit 131.

For example, when the interference power of each path is calculated as shown by the table in FIG. 5 from the two-dimensional profile shown in FIG. 3, the path 1 has the highest path level, while the path 1 has the highest path level for the interference power. Thereby, it is likely that there are many interference users or interference users performing high-speed communication and transmitting large power at DOA (-38°) of the path 1.

However, in the case of the table in FIG. 5, the path 3 has the minimum interference power. It is likely that an interference user is not present or a small number of interference users is present in the direction of the DOA (+12°) of the path 3. Therefore, this embodiment transmits a downlink signal to the DOA of the path 3, enabling performing the communication with a desired user while avoiding an interference user.

The spreading and modulating circuit 137 spreads and modulates the beamformed downlink symbol signals 136-1 to 136-N and outputs the downlink spreaded signals 138-1 to 138-N.

The downlink spreaded signals 138-1 to 138-N are converted into the downlink radio signals 101-1 to 101-N by the radio transmission-reception circuits 102-1 to 102-N and transmitted from the antenna units 100-1 to 100-N.

As described above, the transmitter-receiver of this embodiment selects a plurality of paths each having preferable reception quality among paths detected by forming a directivity beam on an uplink signal, calculates the interference power of each path, forms a directivity beam at the DOA of a path having the minimum interference power to transmit a downlink signal. Even when a desired user and an interference user are present in the same direction, for example, the transmitter-receiver transmits a downlink signal in the direction of an indirect wave having relatively preferable reception quality, instead of the direction of a direct wave from a desired user. Therefore, it is possible to perform the communication with a desired user while avoiding an interference user. Hence, it is possible to preferably perform communication with the desired user without deteriorating the quality of service of the interference user.

### (Second embodiment)

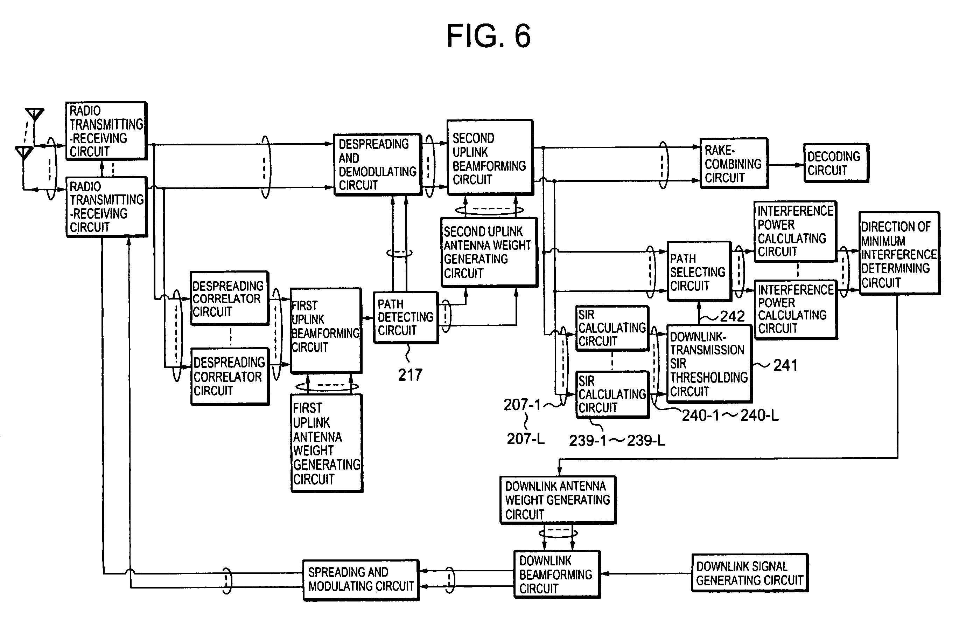

FIG. 6 is a block diagram showing a configuration of second embodiment of a transmitter-receiver of the present invention. In this case, the transmitter-receiver of a mobile communication system of the present invention is an adaptive-antenna transmitter-receiver.

As shown in FIG. 6, the adaptive-antenna transmitter-receiver of the second embodiment has SIR calculating circuits 239-1 to 239-L and downlink-transmission SIR thresholding circuit 241 instead of the downlink path selection thresholding circuit 123 shown in FIG. 2. Furthermore, the adaptive-antenna transmitter-receiver of the second embodiment is different from the adaptive-antenna transmitter-receiver of the first embodiment in that the path detecting circuit 217 does not output the path levels 122-1 to 122-L. Because other configurations are the same as those of the first embodiment, their description is omitted.

The adaptive-antenna transmitter-receiver of the first embodiment uses only a path having a preferable reception quality for determination of the transmitting direction of a downlink signal by determining whether the path level of a path detected by the path detecting circuit 117 is higher than a predetermined downlink path-selecting threshold.

The adaptive-antenna transmitter-receiver of the second embodiment obtains the ratio of signal power to interference power (hereinafter referred to as SIR) from a despreaded symbol for each detected path and uses only a path having preferable reception quality for determination of the transmitting direction of a downlink signal by determining whether the SIR is larger than a predetermined downlink-transmitting path selection SLR threshold.

Beamformed despreaded symbols 207-1 to 207-L for each path, which is outputted from the second uplink beamforming circuit 206 shown in FIG. 6, are outputted to a RAKE-combining circuit 208, path selecting circuit 225, and SIR calculating circuits 239=1 to 239-L.

The SIR calculating circuits 239-1 to 239-L calculate SIRs 240-1 to 240-L from the beamformed despreaded symbols 207-1 to 207-L and output them.

A downlink-transmission SIR thresholding circuit 241 determines whether SIRs 240-1 to 240-L are larger than a downlink-transmission path selection threshold similarly to the case of the downlink-transmission path selection thresholding circuit 123 shown for the first embodiment. Then, the circuit 241 selects H paths respectively having an SIR larger than the threshold and outputs path numbers of the H paths to the path selecting circuit 225 as path-number information 242.

The path selecting circuit 225 selects and outputs H paths specified by the path-number information 242 among beamformed despreaded symbols 207-1 to 207-L. Subsequent processings are the same as the case of the adaptive-antenna transmitter-receiver of the first embodiment.

In the case of the transmitter-receiver of this embodiment, it is possible to perform the communication with the desired user while avoiding the interference user even if a desired user and an interference user are present in the same direction from the transmitter-receiver, similarly to the case of the first embodiment. Therefore, it is possible to preferably communicate with the desired user without deteriorating the quality of service of the interference user.

### (Third embodiment)

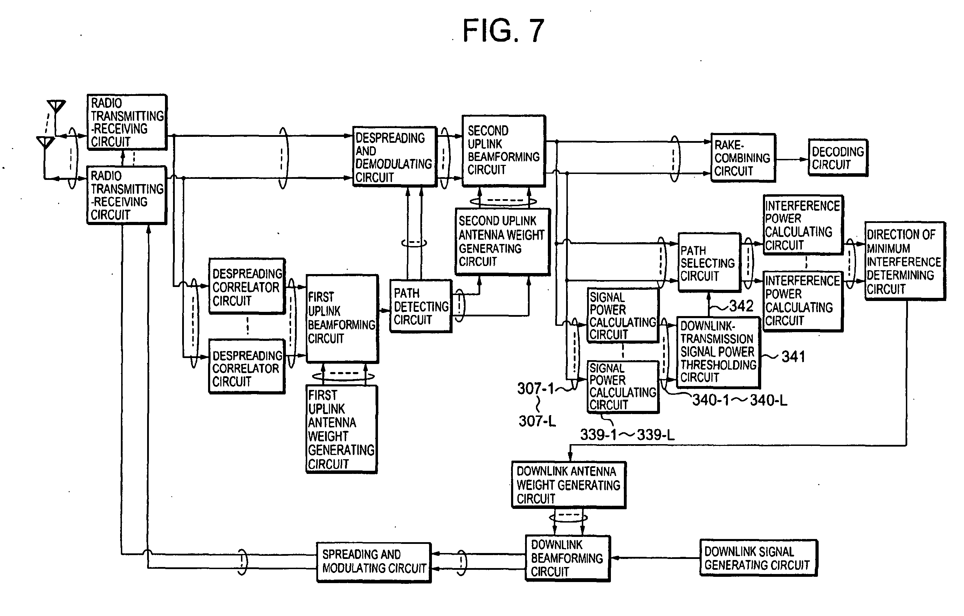

FIG. 7 is a block diagram showing a configuration of third embodiment of a transmitter-receiver of the present invention. In this case, the transmitter-receiver of a mobile communication system of the present invention is an adaptive-antenna transmitter-receiver.

As shown in FIG. 7, the adaptive-antenna transmitter-receiver of the third embodiment has signal-power calculating circuits 339-1 to 339-L instead of the SIR calculating circuits 239-1 to 239-L shown in FIG. 6. Furthermore, the transmitter-receiver of the third embodiment is different from the adaptive-antenna transmitter-receiver of the second embodiment in that it has a downlink-transmission signal power thresholding circuit 341 instead of the downlink-transmission SIR thresholding circuit 241. Because other configurations are the same as those of the second embodiment, their description is omitted. The adaptive-antenna transmitter-receiver of the second embodiment calculates SIR from a despreaded symbol for each path detected by a path detecting circuit and determines whether the SIR is larger than a predetermined downlink-transmitting path-selection SIR threshold to select only a path having preferable reception quality for determining a downlink signal transmitting direction.

The adaptive-antenna transmitter-receiver of the third embodiment calculates signal power of a despreaded symbol for each paths detected by a path detecting circuit and determines whether the signal power is larger than a predetermined downlink-transmitting path-selection signal power threshold to select only a path having preferable reception quality for determining a downlink signal transmitting direction.

Beamformed despreaded symbols 307-1 to 307-L for each path outputted from the second uplink beamforming circuit 306 shown in FIG. 7 are outputted to a RAKE-combining circuit 308, path selecting circuit 325, and signal power calculating circuits 339-1 to 339-L.

The signal power calculating circuits 339-1 to 339-L calculate signal powers 340-1 to 340-L from the beamformed despreaded symbols 307-1 to 307-L and output them.

The downlink-transmission signal power thresholding circuit 341 determines whether L signal powers 340-1 to 340-L are larger than a downlink-transmitting path-selection signal power threshold, similarly to the case of the downlink-transmission path selection thresholding circuit 123 shown in the first embodiment. Then, the circuit 341 selects H paths respectively having signal power larger than the threshold and outputs path numbers of the H paths to the path selecting circuit 325 as path-number information 342. Subsequent processings are the same as the case of the second embodiment.

In the case of the transmitter-receiver of this embodiment, it is possible to perform the communication with the desired user while avoiding the interference user even if a desired user and an interference user are present in the same direction from the transmitter-receiver, similarly to the case of the first and embodiments. Therefore, it is possible to preferably perform communication with the desired user without deteriorating the quality of service of the interference user.

While this invention has been described in connection with certain preferred embodiments, it is to be understood that the subject matter encompassed by way of this invention is not to be limited to those specific embodiments. On the contrary, it is intended for the subj ect matter of the invention to include all alternatives, modifications and equivalents as can be included within the scope of the following claims.

## Claims

1. A transmitter-receiver of a mobile communication system for detecting a plurality of paths of uplink signals received from a desired user, estimating a DOA for each of the paths, demodulating an uplink signal for each of the paths, forming a downlink directivity beam corresponding to the DOA, and transmitting a downlink signal to the desired user said transmitter-receiver, comprising:
an interference-power calculating circuit (127) for calculating the interference power of an uplink signal for each of the paths; and
a direction of minimum interference determining circuit (129) for deciding the direction of a path having the minimum interference power among interference powers calculated by the interference power calculating circuit as the transmitting direction of the downlink signal.

2. The transmitter-receiver of a mobile communication system as claimed in claim 1; wherein
the DOA estimation for each of the paths is performed by multiplying correlation signals of uplink signals received by a plurality of antennas by an antenna weight coefficient, synthesizing the products between antennas and thereby forming a directivity beam to detect a plurality of paths,
demodulation of the uplink signal is performed by multiplying the uplink signal by an antenna weight coefficient corresponding to the DOA, synthesizing uplink signals between antennas and thereby forming a uplink directivity beam, and
transmission of the downlink signal to a desired user is performed by multiplying a downlink signal by an antenna weight coefficient corresponding to the DOA, thereby forming a downlink directivity beam.

3. The transmitter-receiver of a mobile communication system as claimed in claim 1, further comprising:
a downlink-transmission path selection thresholding circuit (123) for determining whether the path level for each of the paths is larger than a predetermined threshold and outputting identification information for identifying a path having a path level higher than the threshold, and
a path selecting circuit (117) for selecting a path specified by the downlink-transmission path selection thresholding circuit and outputting the received signal of the selected path to the interference-power calculating circuit.

4. The transmitter-receiver of a mobile communication system as claimed in claim 2, further comprising:
a downlink-transmission path selection thresholding circuit (123) for determining whether the path level for each of the paths is larger than a predetermined threshold and outputting the identification information for identifying a path having a path level higher than the threshold, and
a path selecting circuit (117) for selecting a path specified by the downlink-transmission path selection thresholding circuit and outputting the received signal of the selected path to the interference-power calculating circuit.

5. The transmitter-receiver of a mobile communication system as claimed in claim 1, further comprising:
an SIR calculating circuit (127) for calculating the ratio of signal power to interference power of the received signal for each of the paths,
a downlink SIR thresholding circuit (241) for determining whether the ratio of signal power to interference power for each of the paths is larger than a predetermined threshold and outputting the identification information for identifying a path having the ratio of signal power to interference power larger than the threshold, and
a path selecting circuit (125) for selecting a path specified by the downlink-transmission SIR thresholding circuit and outputting the received signal of the selected path to the interference-power calculating circuit.

6. The transmitter-receiver of a mobile communication system as claimed in claim 2, further comprising:
an SIR calculating circuit (207) for calculating the ratio of signal power to interference power of a received signal for each of the paths,
a downlink-transmission SIR thresholding circuit (241) for determining whether the ratio of signal power to interference power for each of the paths is larger than a predetermined threshold and outputting the identification information for identifying a path having the ratio of signal power to interference power larger than the threshold, and
a path selecting circuit (125) for selecting a path specified by the downlink-transmission SIR thresholding circuit and outputting the received signal of the selected path to the interference-power calculating circuit.

7. The transmitter-receiver of a mobile communication system as claimed in claim 1, further comprising:
a signal-power calculating circuit (340) for calculating the signal power of a received signal for each of the paths,
a downlink-transmission signal power thresholding circuit (341) for determining whether the signal power for each of the paths is larger than a predetermined threshold and outputting the identification information for identifying a path having signal power larger than the threshold, and
a path selecting circuit (125) for selecting a path specified by the downlink-transmission signal power thresholding circuit and outputting the received signal of the selected path to the interference-power calculating circuit.

8. The transmitter-receiver of a mobile communication system as claimed in claim 2, further comprising:
a signal-power calculating circuit (340) for calculating the signal power of a received signal for each of the paths,
a downlink-transmission signal power thresholding circuit (341) for determining whether the signal power for each of the paths is larger than a predetermined threshold and outputting the identification information for identifying a path having signal power larger than the threshold, and
path selecting circuit (125) for selecting a path specified by the downlink-transmission signal power thresholding circuit and outputting the received signal of the selected path to the interference power calculating circuit.

9. The transmitter-receiver of a mobile communication system as claimed in claim 1, further comprising:
a RAKE-combining circuit (108) for RAKE-combining an uplink signal for each of the paths, and
a decoding circuit (110) for decoding the RAKE-combined uplink signal and reproducing an original signal.

10. The transmitter-receiver of a mobile communication system as claimed in claim 3, further comprising:
a RAKE-combining circuit (108) for RAKE-combining an uplink signal for each of the paths, and
a decoding circuit (110) for decoding the RAKE-combined uplink signal and reproducing an original signal.

11. The transmitter-receiver of a mobile communication system as claimed in claim 5, further comprising:
a RAKE-combining circuit (108) for RAKE-combining an uplink signal for each of the paths, and
a decoding circuit (110) for decoding the RAKE-combined uplink signal and reproducing an original signal.

12. The transmitter-receiver of a mobile communication system as claimed in claim 7, further comprising:
a RAKE-combining circuit (108) for RAKE-combining an uplink signal for each of the paths, and
a decoding circuit (110) for decoding the RAKE-combined uplink signal and reproducing an original signal.

13. A transmitting-receiving method of a transmitter-receiver of a mobile communication system, comprising:
a step of detecting a plurality of paths with a desired user from a received uplink signal;
a step of estimating the DOA for each of paths;
a step of demodulating an uplink signal for each of the path corresponding to the DOA;
a step of calculating the interference power for the uplink signal for each of the paths, forming a downlink directivity beam by using the direction of a path having minimum interference power among calculated interference powers as the transmitting direction of the downlink signal; and
a step of transmitting a downlink signal to the desired user.

14. The transmitting-receiving method of a transmitter-receiver of a mobile communication system as claimed in claim 13, wherein
the step of estimating the DOA detects a plurality of paths from a desired user and estimating the DOA for each of the paths in accordance with a uplink directivity beam formed by multiplying correlation signals of uplink signals received by a plurality of antennas by an antenna weight coefficient and synthesizing the signals between antennas,
the step of demodulating the uplink signals demodulates the uplink signal for each of the paths by multiplying the uplink signals by an antenna weight coefficient corresponding to the DOA and synthesizing the signals between antennas and thereby forming a uplink directivity beam, and
the step of transmitting the downlink signals transmits a downlink signal to the desired user by calculating the interference power for an uplink signal for each of the paths, using the direction of a path having minimum interference power among calculated interference powers as the downlink-signal transmitting direction and thereby multiplying a downlink signal by an antenna weight coefficient and antenna-synthesize the products to form a downlink directivity beam.

15. The transmitting-receiving method of a transmitter-receiver of a mobile communication system as claimed in claim 13; wherein
it is determined for each of the paths whether a path level is higher than a predetermined threshold to calculate the interference powers of the paths whose levels are higher than the threshold.

16. The transmitting-receiving method of a transmitter-receiver of a mobile communication system as claimed in claim 14; wherein
it is determined for each of the paths whether a path level is higher than a predetermined threshold to calculate the interference powers of the paths whose levels are higher than the threshold.

17. The transmitting-receiving method of a transmitter-receiver of a mobile communication system as claimed in claim 13; wherein
the ratio of signal power to interference power of a received signal is calculated for each of the paths, it is determined whether the ratio of signal power to interference power for each of the paths is larger than a predetermined threshold to calculate the interference powers of the paths whose ratios of signal power to interference power are higher than the threshold.

18. The transmitting-receiving method of a transceiver-receiver of a mobile communication system as claimed in claim 14; wherein
the ratio of signal power to interference power of a received signal is calculated for each of the paths, it is determined whether the ratio of signal power to interference power for each of the paths is larger than a predetermined threshold to calculate the interference powers of the paths whose ratios of signal power to interference power are higher than the threshold.

19. The transmitting-receiving method of a transmitter-receiver of a mobile communication system as claimed in claim 13; wherein
the signal power of a received signal is calculated for each of the paths, it is determined whether the signal power for each of the paths is larger than a predetermined threshold to calculate the interference powers of the paths whose signal powers are higher than the threshold.

20. The transmitting-receiving method of a transmitter-receiver of a mobile communication system as claimed in claim 14; wherein
the signal power of a received signal is calculated for each of the paths, it is determined whether the signal power for each of the paths is larger than a predetermined threshold to calculate the interference powers of the paths whose signal powers are higher than the threshold.

## Patentansprüche

1. Sender/Empfänger eines Mobilkommunikationssystems zum Detektieren einer Anzahl von Pfaden von Aufwärtssignalen, die von einem gewünschten Benutzer empfangen worden sind, Einschätzen einer DOA für jeden der Pfade, Demodulieren eines Aufwärtssignals für jeden der Pfade, Ausbilden eines Abwärts-Richtwirkungsstrahls entsprechend der DOA und Übertragen eines Abwärtssignals auf den gewünschten Benutzer, wobei der Sender/Empfänger aufweist:
eine Interferenzleistungsrechenschaltung (127) zum Berechnen der Interferenzleistung eines Aufwärtssignals für jeden der Pfade und
eine Schaltung (129) zum Bestimmen der Richtung der Minimalinterferenz, um die Richtung eines Pfades mit der minimalen Interferenzleistung unter den von der Interferenzleistungsrechenschaltung berechneten Interferenzleistungen als die Übertragungsrichtung des Abwärtssignals zu entscheiden.

2. Sender/Empfänger eines Mobilkommunikationssystems nach Anspruch 1, wobei
die DOA-Einschätzung für jeden der Pfade durchgeführt wird durch Multiplizieren von Korrelationssignalen der durch eine Anzahl von Antennen empfangenen Aufwärtssignalen mit einem Antennengewichtungskoeffizienten, Synthetisieren des Produktes zwischen Antennen und dadurch Ausbilden eines Richtwirkungsstrahls zum Detektieren einer Anzahl von Pfaden,
die Demodulation des Aufwärtssignals durch Multiplizieren des Aufwärtssignals mit einem Antennengewichtungskoeffizienten entsprechend der DOA, Synthetisieren von Aufwärtssignalen zwischen Antennen und dadurch Ausbilden eines Aufwärtsrichtwirkungsstrahls durchgeführt wird und
die Übertragung des Abwärtssignals auf einen gewünschten Nutzer durch Multiplizieren eines Abwärtssignals mit einem Antennengewichtungskoeffizienten entsprechend der DOA durchgeführt wird, wodurch ein Abwärtsrichtwirkungsstrahl gebildet wird.

3. Sender/Empfänger eines Mobilkommunikationssystems nach Anspruch 1, weiterhin mit:
einer Abwärtsübertragungspfad-Wählschwellwertschaltung (123) zum Bestimmen, ob der Pfadpegel für jeden der Pfade größer als ein vorbestimmter Schwellwert ist und Ausgeben von Identifikationsinformation zum Identifizieren eines Pfades mit einem Pfadpegel höher als der Schwellwert und
einer Pfadwählschaltung (117) zum Wählen eines Pfades, der durch die Abwärtsübertragungspfad-Wählschwellwertschaltung spezifiziert worden ist, und Ausgeben des empfangenen Signals des gewählten Pfades an die Interferenzleistungsrechenschaltung.

4. Sender/Empfänger eines Mobilkommunikationssystems nach Anspruch 2, weiterhin mit:
einer Abwärtsübertragungspfad-Wählschwellwertschaltung (123) zum Bestimmen, ob der Pfadpegel für jeden der Pfade größer als ein vorbestimmter Schwellwert ist, und Ausgeben der Identifikationsinformation zum Identifizieren eines Pfades mit einem Pfadpegel höher als der Schwellwert und
einer Pfadwählschaltung (117) zum Wählen eines Pfades, der von der Abwärtsübertragungspfad-Wählschwellwertschaltung spezifiert worden ist, und Ausgeben des empfangenen Signals des gewählten Pfades an die Interferenzleistungsrechenschaltung.

5. Sender/Empfänger eines Mobilkommunikationssystems nach Anspruch 1, weiterhin mit:
einer SIR-Rechenschaltung (239) zum Berechnen des Verhältnisses der Signalleistung zur Interferenzleistung des empfangenen Signals für jeden der Pfade,
einer Abwärts-SIR-Schwellwertschaltung (241) zum Bestimmen, ob das Verhältnis der Signalleistung zur Interferenzleistung für jeden der Pfade größer als ein vorbestimmter Schwellwert ist, und Ausgeben der Identifikationsinformation zum Identifizieren eines Pfades, der ein Verhältnis der Signalleistung zur Interferenzleistung größer als der Schwellwert hat, und
einer Pfadwählschaltung (125) zum Wählen eines Pfades, der von der Abwärtsübertragungs-SIR-Schwellwertschaltung spezifiziert worden ist, und Ausgeben des empfangenen Signals eines gewählten Pfades an die Interferenzleistungsrechenschaltung.

6. Sender/Empfänger eines Mobilkommunikationssystems nach Anspruch 2, weiterhin mit:
einer SIR-Rechenschaltung (239) zum Berechnen des Verhältnisses der Signalleistung zur Interferenzleistung eines empfangenen Signals für jeden der Pfade,
einer Abwärtsübertragungs-SIR-Schwellwertschaltung (241) zum Bestimmen, ob das Verhältnis der Signalleistung zur Interferenzleistung für jeden der Pfade größer als ein vorbestimmter Schwellwert ist, und Ausgeben der Identifikationsinformation zum Identifizieren eines Pfades, dessen Verhältnis von Signalleistung zur Interferenzleistung größer als der Schwellwert ist, und
einer Pfadwählschaltung (125) zum Wählen eines Pfades, der durch die Abwärtsübertragungs-SIR-Schwellwertschaltung spezifiziert worden ist, und Ausgeben des empfangenen Signals des gewählten Pfades an die Interferenzleistungsrechenschaltung.

7. Sender/Empfänger eines Mobilkommunikationssystems nach Anspruch 1, weiterhin mit:
einer Signalleistungsrechenschaltung (339) zum Berechnen der Signalleistung eines empfangenen Signals für jeden der Pfade,
einer Abwärtsübertragungssignalleistungsschwellwertschaltung (341) zum Bestimmen, ob die Signalleistung für jeden der Pfade größer als ein vorbestimmter Schwellwert ist, und Ausgeben der Identifikationsinformation zum Identifizieren eines Pfades, dessen Signalleistung größer als der Schwellwert ist, und
einer Pfadwählschaltung (125) zum Wählen eines Pfades, der durch die Abwärtsübertragungssignalleistungsschwellwertschaltung spezifiziert worden ist, und Ausgeben des empfangenen Signals des gewählten Pfades an die Interferenzleistungsrechenschaltung.

8. Sender/Empfänger eines Mobilkommunikationssystems nach Anspruch 2, weiterhin mit:
einer Signalleistungsrechenschaltung (339) zum Berechnen der Signalleistung eines empfangenen Signals für jeden der Pfade,
einer Abwärtsübertragungssignalleistungsschwellwertschaltung (341) zum Bestimmen, ob die Signalleistung für jeden der Pfade größer als ein vorbestimmter Schwellwert ist, und Ausgeben der Identifikationsinformation zum Identifizieren eines Pfades mit einer Signalleistung größer als der Schwellwert und
einer Pfadwählschaltung (125) zum Wählen eines Pfades, der durch die Abwärtsübertragungssignalleistungsschwellwertschaltung spezifiziert worden ist, und Ausgeben des empfangenen Signals des gewählten Pfades an die Interferenzleistungsrechenschaltung.

9. Sender/Empfänger eines Mobilkommunikationssystems nach Anspruch 1, weiterhin mit:
einer RAKE-Kombinationsschaltung (108) für eine RAKE-Kombination eines Aufwärtssignals für jeden der Pfade und
einer Dekodierschaltung (110) zum Dekodieren des RAKE-kombinierten Aufwärtssignals und Reproduzieren eines Originalsignals.

10. Sender/Empfänger eines Mobilkommunikationssystems nach Anspruch 5, weiterhin mit:
einer RAKE-Kombinierschaltung (108) zum RAKE-Kombinieren eines Aufwärtssignals für jeden der Pfade und
einer Dekodierschaltung (110) zum Dekodieren des RAKE-kombinierten Aufwärtssignals und Reproduzieren eines Originalsignals.

11. Sender/Empfänger eines Mobilkommunikationssystems nach Anspruch 5, weiterhin mit:
einer RAKE-Kombinierschaltung (108) zum RAKE-Kombinieren eines Aufwärtssignals für jeden der Pfade und
einer Dekodierschaltung (110) zum Dekodieren des RAKE-kombinierten Aufwärtssignals und Reproduzieren eines Originalsignals.

12. Sender/Empfänger eines Mobilkommunikationssystems nach Anspruch 7, weiterhin mit:
einer RAKE-Kombinierschaltung (108) zum RAKE-Kombinieren eines Aufwärtssignals für jeden der Pfade und
einer Dekodierschaltung (110) zum Dekodieren des RAKE-kombinierten Aufwärtssignals und Reproduzieren eines Originalsignals.

13. Sende-Empfangs-Verfahren eines Senders/Empfängers eines Mobilkommunikationssystems, mit:
einem Schritt zum Detektieren einer Anzahl von Pfaden mit einem gewünschten Benutzer von einem empfangenen Aufwärtssignal;
einem Schritt zum Schätzen der DOA für jeden der Pfade;
einem Schritt zum Demodulieren eines Aufwärtssignals für jeden der Pfade entsprechend der DOA;
einem Schritt zum Berechnen der Interferenzleistung für das Aufwärtssignal für jeden der Pfade, Ausbilden eines Abwärtsrichtwirkungsstrahls unter Verwendung der Richtung eines Pfades mit der minimalen Interferenzleistung unter den berechneten Interferenzleistungen als der Senderichtung des Abwärtssignals und
einem Schritt zum Senden eines Abwärtssignals an den gewünschten Nutzer.

14. Sende-Empfangs-Verfahren eines Senders/Empfängers eines Mobilkommunikationssystems nach Anspruch 13, wobei
der Schritt zum Schätzen der DOA eine Anzahl von Pfaden von einem gewünschten Nutzer detektiert und die DOA für jeden der Pfade in Übereinstimmung mit einem Aufwärtsrichtwirkungsstrahl einschätzt, der durch Multiplizieren von Korrelationssignalen der Aufwärtssignale, die von einer Anzahl von Antennen empfangen worden sind, mit einem Antennengewichtungskoeffizienten gebildet ist, und Synthetisieren der Signale zwischen Antennen,
der Schritt zum Demodulieren der Aufwärtssignale die Aufwärtssignale für jeden der Pfade demoduliert, indem die Aufwärtssignale mit einem Antennengewichtungskoeffzienten entsprechend der DOA multipliziert werden, und Synthetisieren der Signale zwischen den Antennen und dadurch Ausbilden eines Aufwärtsrichtwirkungsstrahls, und
der Schritt zum Senden der Abwärtssignale ein Abwärtssignal an den gewünschten Nutzer durch Berechnen der Interferenzleistung für ein Aufwärtssignal für jeden der Pfade sendet, wobei die Richtung eines Pfades verwendet wird, der eine minimale Interferenzleistung unter den berechneten Interferenzleistungen als die Abwärtssignalsenderichtung verwendet wird, und dabei Multiplizieren eines Abwärtssignals mit einem Antennengewichtungskoeffizienten und Antennen-Synthetisieren des Produktes, um einen Abwärtsrichtwirkungsstrahl zu bilden.

15. Sende-Empfangs-Verfahren eines Senders/Empfängers eines Mobilkommunikationssystems nach Anspruch 13, wobei
für jeden der Pfade bestimmt wird, ob ein Pfadpegel höher als ein vorbestimmter Schwellwert ist, um die Interferenzleistungen der Pfade zu berechnen, deren Pegel höher als der Schwellwert sind.

16. Sende-Empfangs-Verfahren eines Senders/Empfängers eines Mobilkommunikationssystems nach Anspruch 14, wobei
für jeden der Pfade bestimmt wird, ob ein Pfadpegel höher als ein vorbestimmter Schwellwert ist, um die Interferenzleistungen der Pfade zu berechnen, deren Pegel höher als der Schwellwert sind.

17. Sende-Empfangs-Verfahren eines Senders/Empfängers eines Mobilkommunikationssystems nach Anspruch 13, wobei
das Verhältnis der Signalleistung zur Interferenzleistung eines empfangenen Signals für jeden der Pfade berechnet wird, bestimmt wird, ob das Verhältnis der Signalleistung zur Interferenzleistung für jeden der Pfade größer als ein vorbestimmter Schwellwert ist, um die Interferenzleistungen der Pfade zu berechnen, deren Verhältnisse von Signalleistung zur Interferenzleistung höher als der Schwellwert sind.

18. Sende-Empfangs-Verfahren eines Senders/Empfängers eines Mobilkommunikationssystems nach Anspruch 14, wobei
das Verhältnis der Signalleistung zur Interferenzleistung eines empfangenen Signals für jeden der Pfade berechnet wird, bestimmt wird, ob das Verhältnis der Signalleistung zur Interferenzleistung für jeden der Pfade größer als ein vorbestimmter Schwellwert ist, um die Interferenzleistungen der Pfade zu berechnen, deren Verhältnisse der Signalleistung zur Interferenzleistung höher als der Schwell wert sind.

19. Sende-Empfangs-Verfahren eines Senders/Empfängers eines Mobilkommunikationssystems nach Anspruch 13, wobei
die Signalleistung eines empfangenen Signals für jeden der Pfade berechnet wird, bestimmt wird, ob die Signalleistung für jeden der Pfade größer als ein vorbestimmter Schwellwert ist, um die Interferenzleistungen der Pfade zu berechnen, deren Signalleistungen höher als der Schwellwert sind.

20. Sende-Empfangs-Verfahren eines Senders/Empfängers eines Mobilkommunikationssystems nach Anspruch 14, wobei
die Signalleistung eines empfangenen Signals für jeden der Pfade berechnet wird, bestimmt wird, ob die Signalleistung für jeden der Pfade größer als ein vorbestimmter Schwellwert ist, um die Interferenzleistungen der Pfade zu berechnen, deren Signalleistungen höher als der Schwellwert ist.

## Revendications

1. Emetteur-récepteur d'un système de communication mobile pour détecter une pluralité de trajets de signaux de liaison montante reçus d'un utilisateur souhaité, estimer une direction d'arrivée (DOA pour « Direction of Arrival ») pour chacun des trajets, démoduler un signal de liaison montante pour chacun des trajets, former un faisceau de directivité de liaison descendante correspondant au DOA, et transmettre un signal de liaison descendante à l'utilisateur souhaité, ledit émetteur-récepteur comprenant :
un circuit de calcul de puissance d'interférence (127) pour calculer la puissance d'interférence d'un signal de liaison montante pour chacun des trajets ; et
un circuit de détermination de direction d'interférence minimum (129) pour décider de la direction d'un trajet ayant la puissance d'interférence minimum parmi des puissances d'interférence calculées par le circuit de calcul de puissance d'interférence en tant que direction de transmission du signal de liaison descendante.

2. Emetteur-récepteur d'un système de communication mobile selon la revendication 1, dans lequel
l'estimation de DOA pour chacun des trajets est effectuée en multipliant des signaux de corrélation de signaux de liaison montante reçus par une pluralité d'antennes par un coefficient de pondération d'antenne, en synthétisant les produits entre des antennes et en formant de ce fait un faisceau de directivité pour détecter une pluralité de trajets,
la démodulation du signal de liaison montante est effectuée en multipliant le signal de liaison montante par un coefficient de pondération d'antenne correspondant au DOA, en synthétisant des signaux de liaison montante entre des antennes et en formant de ce fait un faisceau de directivité de liaison montante, et
la transmission du signal de liaison descendante à un utilisateur souhaité est effectuée en multipliant un signal de liaison descendante par un coefficient de pondération d'antenne correspondant au DOA, formant de ce fait un faisceau de directivité de liaison descendante.

3. Emetteur-récepteur d'un système de communication mobile selon la revendication 1, comprenant en outré :
un circuit de seuillage de sélection de trajet de transmission de liaison descendante (123) pour déterminer si le niveau de trajet pour chacun des trajets est supérieur à un seuil prédéterminé et pour délivrer des informations d'identification pour identifier un trajet ayant un niveau de trajet supérieur au seuil, et
un circuit de sélection de trajet (117) pour sélectionner un trajet spécifié par le circuit de seuillage de sélection de trajet de transmission de liaison descendante et pour délivrer le signal reçu du trajet sélectionné au circuit de calcul de puissance d'interférence.

4. Emetteur-récepteur d'un système de communication mobile selon la revendication 2, comprenant en outre :
un circuit de seuillage de sélection de trajet de transmission de liaison descendante (123) pour déterminer si le niveau de trajet pour chacun des trajets est supérieur à un seuil prédéterminé et pour délivrer les informations d'identification pour identifier un trajet ayant un niveau de trajet supérieur au seuil, et
un circuit de sélection de trajet (117) pour sélectionner un trajet spécifié par le circuit de seuillage de sélection de trajet de transmission de liaison descendante et pour délivrer le signal reçu du trajet sélectionné au circuit de calcul de puissance d'interférence.

5. Emetteur-récepteur d'un système de communication mobile selon la revendication 1, comprenant en outre :
un circuit de calcul de SIR (239) pour calculer le rapport puissance de signal sur puissance d'interférence du signal reçu pour chacun des trajets,
un circuit de seuillage de SIR de liaison descendante (241) pour déterminer si le rapport puissance de signal sur puissance d'interférence pour chacun des trajets est supérieur à un seuil prédéterminé et pour délivrer les informations d'identification pour identifier un trajet ayant le rapport puissance de signal sur puissance d'interférence supérieur au seuil, et
un circuit de sélection de trajet (125) pour sélectionner un trajet spécifié par le circuit de seuillage de SIR de transmission de liaison descendante et pour délivrer le signal reçu du trajet sélectionné au circuit de calcul de puissance d'interférence.

6. Emetteur-récepteur d'un système de communication mobile selon la revendication 2, comprenant en outre :
un circuit de calcul de SIR (239) pour calculer le rapport puissance de signal sur puissance d'interférence pour un signal reçu pour chacun des trajets,
un circuit de seuillage de SIR de transmission de liaison descendante (241) pour déterminer si le rapport puissance de signal sur puissance d'interférence pour chacun des trajets est supérieur à un seuil prédéterminé et pour délivrer les informations d'identification pour identifier un trajet ayant le rapport puissance de signal sur puissance d'interférence supérieur au seuil, et
un circuit de sélection de trajet (125) pour sélectionner un trajet spécifié par le circuit de seuillage de SIR de transmission de liaison descendante et pour délivrer le signal reçu du trajet sélectionné au circuit de calcul de puissance d'interférence.

7. Emetteur-récepteur d'un système de communication mobile selon la revendication 1, comprenant en outre :
un circuit de calcul de puissance de signal (340) pour calculer la puissance de signal d'un signal reçu pour chacun des trajets,
un circuit de seuillage de puissance de signal de transmission de liaison descendante (341) pour déterminer si la puissance de signal pour chacun des trajets est supérieure à un seuil prédéterminé et pour délivrer les informations d'identification pour identifier un trajet ayant une puissance de signal supérieure au seuil, et
un circuit de sélection de trajet (125) pour sélectionner un trajet spécifié par le circuit de seuillage de puissance de signal de transmission de liaison descendante et pour délivrer le signal reçu du trajet sélectionné au circuit de calcul de puissance d'interférence.

8. Emetteur-récepteur d'un système de communication mobile selon la revendication 2, comprenant en outre :
un circuit de calcul de puissance de signal (340) pour calculer la puissance de signal d'un signal reçu pour chacun des trajets,
un circuit de seuillage de puissance de signal de transmission de liaison descendante (341) pour déterminer si la puissance de signal pour chacun des trajets est supérieure à un seuil prédéterminé et pour délivrer les informations d'identification pour identifier un trajet ayant une puissance de signal supérieure au seuil, et
un circuit de sélection de trajet (125) pour sélectionner un trajet spécifié par le circuit de seuillage de puissance de signal de transmission de liaison descendante et pour délivrer le signal reçu du trajet sélectionné au circuit de calcul de puissance d'interférence.

9. Emetteur-récepteur d'un système de communication mobile selon la revendication 1, comprenant en outre :
un circuit de combinaison RAKE (108) pour combiner RAKE un signal de liaison montante pour chacun des trajets, et
un circuit de décodage (110) pour décoder le signal de liaison montante combiné RAKE et pour reproduire un signal original.

10. Emetteur-récepteur d'un système de communication mobile selon la revendication 3, comprenant en outre :
un circuit de combinaison RAKE (108) pour combiner RAKE un signal de liaison montante pour chacun des trajets, et
un circuit de décodage (110) pour décoder le signal de liaison montante combiné RAKE et pour reproduire un signal original.

11. Emetteur-récepteur d'un système de communication mobile selon la revendication 5, comprenant en outre :
un circuit de combinaison RAKE (108) pour combiner RAKE un signal de liaison montante pour chacun des trajets, et
un circuit de décodage (110) pour décoder le signal de liaison montante combiné RAKE et pour reproduire un signal original.

12. Emetteur-récepteur d'un système de communication mobile selon la revendication 7, comprenant en outre :
un circuit de combinaison RAKE (108) pour combiner RAKE un signal de liaison montante pour chacun des trajets, et
un circuit de décodage (110) pour décoder le signal de liaison montante combiné RAKE et pour reproduire un signal original.

13. Procédé d'émission-réception d'un émetteur-récepteur d'un système de communication mobile, comprenant :
une étape de détection d'une pluralité de trajets avec un utilisateur souhaité à partir d'un signal de liaison montante reçu ;
une étape d'estimation du DOA pour chacun des trajets ;
une étape de démodulation d'un signal de liaison montante pour chacun des trajets correspondant au DOA ;
une étape de calcul de la puissance d'interférence pour le signal de liaison montante pour chacun des trajets, de formation d'un faisceau de directivité de liaison descendante en utilisant la direction d'un trajet ayant une puissance d'interférence minimum parmi des puissances d'interférence calculées en tant que direction de transmission du signal de liaison descendante ; et
une étape de transmission d'un signal de liaison descendante à l'utilisateur souhaité.

14. Procédé d'émission-réception d'un émetteur-récepteur d'un système de communication mobile selon la revendication 13, dans lequel
l'étape d'estimation du DOA détecte une pluralité de trajets à partir d'un utilisateur souhaité et d'estimation du DOA pour chacun des trajets conformément à un faisceau de directivité de liaison montante formé en multipliant des signaux de corrélation de signaux de liaison montante reçus par une pluralité d'antennes par un coefficient de pondération d'antenne et en synthétisant les signaux entre des antennes,
l'étape de démodulation des signaux de liaison montante démodule le signal de liaison montante pour chacun des trajets en multipliant les signaux de liaison montante par un coefficient de pondération d'antenne correspondant au DOA et en synthétisant les signaux entre des antennes et en formant de ce fait un faisceau de directivité de liaison montante, et
l'étape de transmission des signaux de liaison descendante transmet un signal de liaison descendante à l'utilisateur souhaité en calculant la puissance d'interférence pour un signal de liaison montante pour chacun des trajets, en utilisant la direction d'un trajet ayant une puissance d'interférence minimum parmi des puissances d'interférence calculées en tant que direction de transmission de signal de liaison descendante et en multipliant de ce fait un signal de liaison descendante par un coefficient de pondération d'antenne et en synthétisant entre des antennes les produits pour former un faisceau de directivité de liaison descendante.

15. Procédé d'émission-réception d'un émetteur-récepteur d'un système de communication mobile selon la revendication 13, dans lequel
il est déterminé, pour chacun des trajets, si un niveau de trajet est supérieur à un seuil prédéterminé pour calculer les puissances d'interférence des trajets dont les niveaux sont supérieurs au seuil.

16. Procédé d'émission-réception d'un émetteur-récepteur d'un système de communication mobile selon la revendication 14, dans lequel
il est déterminé, pour chacun des trajets, si un niveau de trajet est supérieur à un seuil prédéterminé pour calculer les puissances d'interférence des trajets dont les niveaux sont supérieurs au seuil.

17. Procédé d'émission-réception d'un émetteur-récepteur d'un système de communication mobile selon la revendication 13, dans lequel
le rapport puissance de signal sur puissance d'interférence d'un signal reçu est calculé pour chacun des trajets, il est déterminé si le rapport puissance de signal sur puissance d'interférence pour chacun des trajets est supérieur à un seuil prédéterminé pour calculer les puissances d'interférence des trajets dont les rapports puissance de signal sur puissance d'interférence sont supérieurs au seuil.

18. Procédé d'émission-réception d'un émetteur-récepteur d'un système de communication mobile selon la revendication 14, dans lequel
le rapport puissance de signal sur puissance d'interférence d'un signal reçu est calculé pour chacun des trajets, il est déterminé si le rapport puissance de signal sur puissance d'interférence pour chacun des trajets est supérieur à un seuil prédéterminé pour calculer les puissances d'interférence des trajets dont les rapports puissance de signal sur puissance d'interférence sont supérieurs au seuil.

19. Procédé d'émission-réception d'un émetteur-récepteur d'un système de communication mobile selon la revendication 13, dans lequel
la puissance de signal d'un signal reçu est calculée pour chacun des trajets, il est déterminé si la puissance de signal pour chacun des trajets est supérieure à un seuil prédéterminé pour calculer les puissances d'interférence des trajets dont les puissances de signal sont supérieures au seuil.

20. Procédé d'émission-réception d'un émetteur-récepteur d'un système de communication mobile selon la revendication 14, dans lequel
la puissance de signal d'un signal reçu est calculée pour chacun des trajets, il est déterminé si la puissance de signal pour chacun des trajets est supérieure à un seuil prédéterminé pour calculer les puissances d'interférence des trajets dont les puissances de signal sont supérieures au seuil.
